# EUROPEAN PATENT SPECIFICATION

(11) **EP 3 500 817 B1**
(45) Date of publication and mention of the grant of the patent: **27.01.2021**
(21) Application number: 17748582.8
(22) Date of filing: 06.06.2017
(51) Int. Cl.: F41H 3/00, G02F 1/17, G02F 1/15

(54) **SYSTEM FOR CONTROLLING THERMAL RADIATION**
SYSTEM ZUR STEUERUNG VON WÄRMESTRAHLUNG
SYSTÈME DE COMMANDE DE RAYONNEMENT THERMIQUE

(30) Priority: 07.06.2016 TR 201607656
(43) Date of publication of application: 26.06.2019
(73) Proprietor: Kocabas, Coskun, 06800 Ankara (TR)
(72) Inventor: Kocabas, Coskun, 06800 Ankara (TR)
(74) Representative: Cayli, Hülya
(86) International application number: PCT/TR2017/050251
(87) International publication number: WO 2017/213614

(56) References cited:
- WO-A1-2011/112882
- WO-A1-2016/081293
- DE-A1- 3 643 692
- US-A- 5 638 205
- US-A1- 2014 247 478

## Description

### Field of the Invention

The present invention relates to a system, in which the emitted thermal radiation is controllable.

### Background of the Invention

All materials emit thermal radiation to their surroundings due to the thermal energy they have. Said thermal radiation can be detected by thermal radiation detection cameras called thermal cameras. In this way, for example, even if an object with a certain temperature is behind an obstacle, it is to be detected due to the emission of thermal radiation different from its surroundings. Said thermal cameras can be used to detect targets in defence industry, as well as in daily life (for example to detect any water leakage in a plumbing system).

Thermal radiation emitted from a material due to the thermal energy it has is calculated with Stefan-Boltzmann law. According to the Stefan-Boltzmann law, the thermal radiation emitted from a material is calculated with the formula P=εσT⁴, where P is the thermal radiation emitted from a surface of a material, ε is emissivity of the surface, σ is Stefan-Boltzmann constant, and T is temperature of the surface.

For the thermal camouflage of a material, the thermal radiation emitted from the material must be controlled. In the prior art, there are various embodiments for controlling thermal radiation of the materials. For example, the patent document no. US2001054503A1 discloses an element for adjusting infrared surface emissivity of a surface. Said element comprises an active layer whose infrared surface emissivity can be changed by hydrogen, and a hydrogen source for supplying hydrogen to said layer. However, hydrogen in the hydrogen source is consumed over time in the system disclosed in the patent document no. US2001054503A1 because hydrogen is a volatile material with a very small molecular size. This causes said system to be short-lived WO 2011/112882 A1 discloses a known system for controlling thermal radiation emitted from a surface of a material.

### Brief Description of the Invention

With the present invention, there is provided a system according to claim 1. The system is for controlling thermal radiation emitted from a surface of a material. Said system comprises at least one outer layer which comprises a carbon based nano material; at least one inner layer which is situated below the outer layer and has a structure which does not interact with the ionic structures; at least one intermediate layer which is provided between the outer layer and the inner layer and comprising electrolyte; at least one power supply which applies electrical voltage to the outer layer and the inner layer so as to allow anions and/or cations in the electrolyte located in the intermediate layer to pass to the outer layer.

In the system of the present invention, electrical voltage is applied to the outer layer and the inner layer so that anions and/or cations in the electrolyte located in the intermediate layer are allowed to pass to the outer layer. Thus, emission value of the outer layer is able to be changed and the thermal radiation emitted from the outer layer to the outside is able to be controlled.

### Object of the Invention

An object of the invention is to provide a system, in which the emitted thermal radiation is controllable.

The other object of the invention is to provide a system for thermal camouflage.

Another object of the invention is to provide a flexible system for use in garments as well. Yet another object of the invention is to provide a long-lasting system.

### Description of the Drawings

Exemplary embodiments of the system, whose thermal radiation is controlled, according to the present invention are illustrated in the attached drawings, wherein:
Figure 1 is a perspective view of the system according to the present invention.
Figure 2 is a side view of an exemplary circuit diagram of the system according to the present invention.
Figure 3 is a graph of the emitted energy/emission versus the applied voltage of an exemplary embodiment of the system according to the present invention.
Figure 4 is a graph of surface resistance versus the applied voltage of an exemplary embodiment of the system according to the present invention.
Figure 5 is a side view of a circuit diagram of an alternative embodiment of the system according to the present invention.
Figure 6 is a graph of time-dependent change in background temperature and the detected temperature of a surface in an exemplary embodiment of the system according to the present invention.
Figure 7 is a perspective view of an alternative embodiment of the system according to the present invention.
Figure 8 is a perspective view of another alternative embodiment of the system according to the present invention.

All the parts illustrated in the drawings are individually assigned a reference numeral and the corresponding terms of these numbers are listed as follows:

| | |
|---|---|
| Background | (B) |
| Surface | (Y) |
| Outer layer | (1) |
| Inner layer | (2) |
| Intermediate layer | (3) |
| Power supply | (4) |
| Control unit | (5) |
| Temperature sensor | (6) |
| Radiation sensor | (7) |
| Insulation layer | (8) |
| Electrode layer | (9) |

### Description of Invention

All materials emit thermal radiation to their surroundings due to the thermal energy they have. Said thermal radiation varies depending on temperature of the material and emissivity of the surface over which the thermal radiation emits. Since the temperature and emission values of different materials in a medium differ from each other, the amount of thermal radiation they emit is also different. Therefore, for example, different materials in a medium can be distinguished from each other by using a thermal camera. With the present invention, there is developed a system which provides thermal camouflage for example in a medium of said material by controlling the thermal radiation emitted from a surface of a material

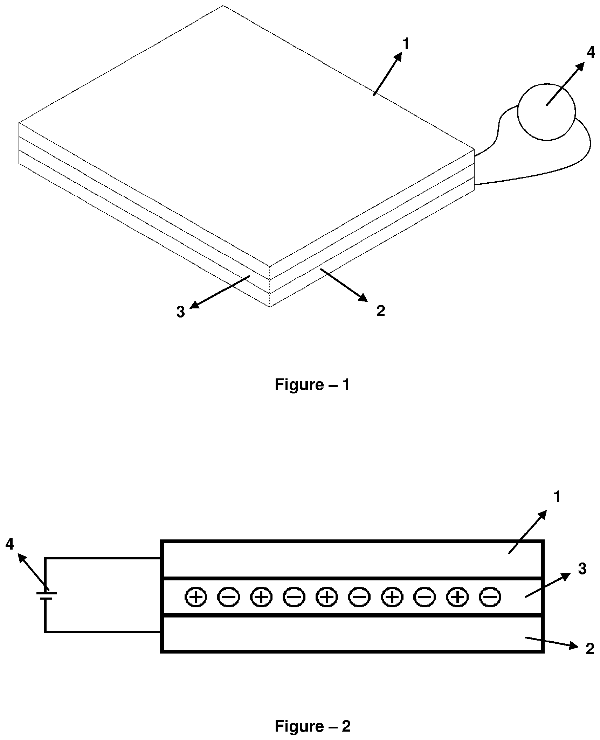

The system, the exemplary views of which are illustrated in Figures 1-5, of the present invention comprises at least one outer layer (1) comprising 20-500 graphene layers; at least one inner layer (2) which is situated below the outer layer (1) and has an inert structure which does not interact with the ionic structures; at least one intermediate layer (3) which is provided between the outer layer (1) and the inner layer (2) and comprising electrolyte (for example ionic liquid); at least one power supply (4) which applies electrical voltage to the outer layer (1) and the inner layer (2) so as to allow anions and/or cations in the electrolyte located in the intermediate layer (3) to pass to the outer layer (1). By virtue of the fact that the inner layer (2) has such a structure which does not interact with ionic structures, the electrolyte in the intermediate layer (3) is prevented from damaging the inner layer (2).

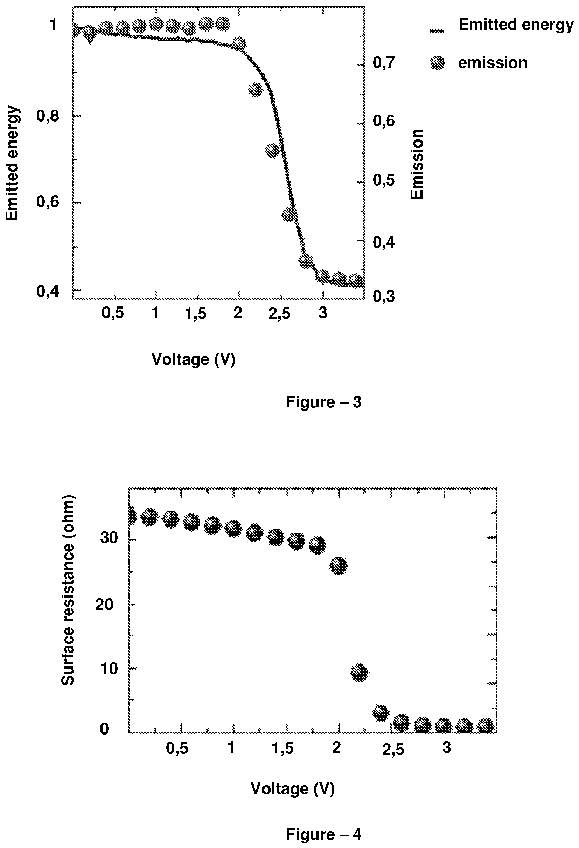

In an exemplary embodiment, the system developed according to the present invention is positioned on a material whose thermal radiation is to be controlled such that the inner layer (2) faces (preferably contacts the surface (Y)) thermal radiation emitting surface (Y) of the object. According to the Stefan-Boltzmann law (P=εσT⁴), the amount of thermal radiation emitted from a surface (Y) varies depending on surface (Y) temperature and emissivity of the surface (Y). When the system developed according to the present invention is placed on a surface (Y), thermal radiation is emitted from the outer layer (1). The temperature of the outer layer (1) is nearly equal to the temperature of the surface (Y), the thermal radiation emitted from the outer layer (1) can be changed by changing the emission value of the outer layer (1). The change of the emission value of the outer layer (1) is, in turn, ensured by passing the anions and/or cations in the electrolyte located in the intermediate layer (3) to the outer layer (1). When the anions and/or cations pass to the outer layer (1), carbon-based nano material in the outer layer (1) is stimulated. As a result of this stimulation, charge density of the carbon-based nano material is increased and Fermi level thereof shifts to a higher energy level. As a result, infrared absorption of the outer layer (1) is suppressed and the emission thereof is reduced. Here, the amount of anions and/or cations passing from the electrolyte in the intermediate layer (3) to the outer layer (1) varies depending on the electrical voltage applied to the outer layer (1) and the inner layer (2). For this reason, by changing said electrical voltage amount, the emissivity of the outer layer (1) is also able to be changed. The graph in Figure 3 shows, in a system placed on a material (for example a material with a surface (Y) temperature of 55°C), the change in the energy of the thermal radiation emitted from the outer layer (1) and in the emission value of the outer layer (1) according to the electrical voltage applied to the outer layer (1) and the inner layer (2). The change in the surface (Y) resistance of the outer layer (1) depending on the applied electrical voltage is also shown in the graph in Figure 4. Here, since the outer layer (1) comprises a carbon-based nano material such as graphene, it is ensured that the outer layer (1) does not need an external conductive layer (electrode).

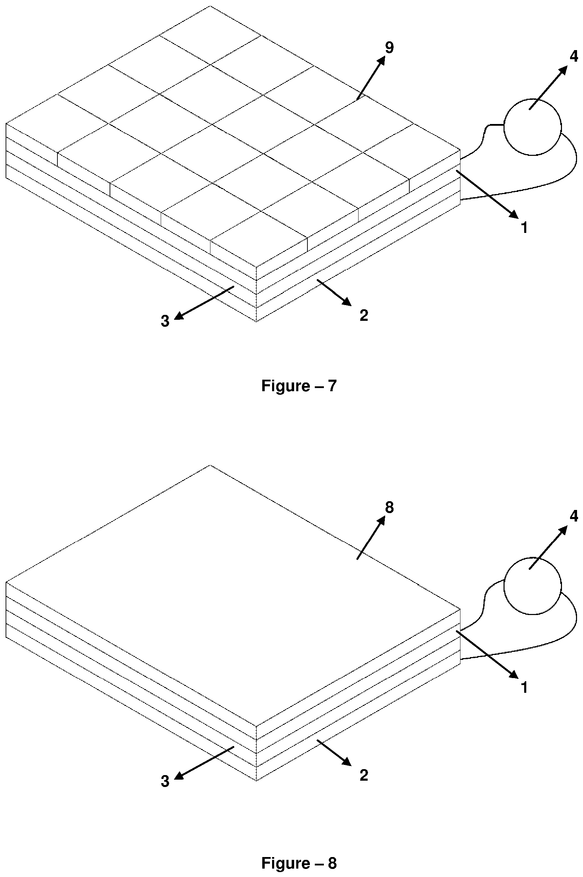

Although the outer layer (1) does not need an external conductor in the system developed according to the present invention, the anions and / or cations passing from the intermediate layer (3) to the outer layer (1) may not be uniformly distributed in the outer layer (1) because an equal amount of current does not flow through each part of the outer layer (1) especially as the surface area of the outer layer (1) increases (for example the surface area being larger than 100 cm²). Therefore, in an exemplary embodiment of the invention shown in Figure 7, said system comprises at least one electrode layer (9), preferably in the form of a mesh, which is situated on the outer layer (1) and which allows the current received from the power supply (4) to pass uniformly over the outer layer (1).

In another exemplary embodiment of the invention as shown in Figure 8, the system comprises at least one insulation layer (8) which is situated on the outer layer (1) and which prevents the outer layer (1) from being damaged by the environmental factors. Said insulation layer (8) prevents the outer layer (1) from being damaged especially in the embodiments where the surface area of the outer layer (1) is large. The insulation layer (8) has preferably an infrared-permeable structure such as polyethylene, silicone, diamondlike carbon, polypropylene. Thus, it is ensured that the insulation layer (8) does not affect the emission value of the outer layer (1).

In another preferred embodiment, said inner layer (2) comprises a heat-resistant substrate (e.g. a heat-resistant nylon layer with a thickness of 25 µm), and a conductive layer which is provided on the substrate and has an inert structure (such as gold, platinum, palladium, graphene, carbon, and more specifically a gold layer with a thickness of 100 nm). Said conductive layer is bonded onto the substrate preferably by means of a binding layer (e.g. a titanium layer with a thickness of 5 nm), preferably by adhesion.

In another preferred embodiment, said intermediate layer (3) comprises a porous polymer film (e.g. a polyethylene film with a thickness of 20-50 µm) and an electrolyte (for example Diethylmethyl (2-methoxyethyl) ammonium bis (trifluoromethylsulfonyl) imide - Diethylmethyl -methoxyethyl) ammonium bis (trifluoromethylsulfonyl) imide) that is present in said polymer film. Thanks to the porous structure of the polymer film, it is ensured that the electrolyte is positioned within the polymer film. Said polymer film is preferably an infrared transparent structure.

By virtue of the fact that in the system developed according to the present invention, the outer layer (1), the inner layer (2) and the intermediate layer (3) are very thin structures, the whole system is also ensured to have a thin and flexible form. Thus, said system is ensured to be used for example in various surfaces (Y) such as air, land and sea vehicles and clothes.

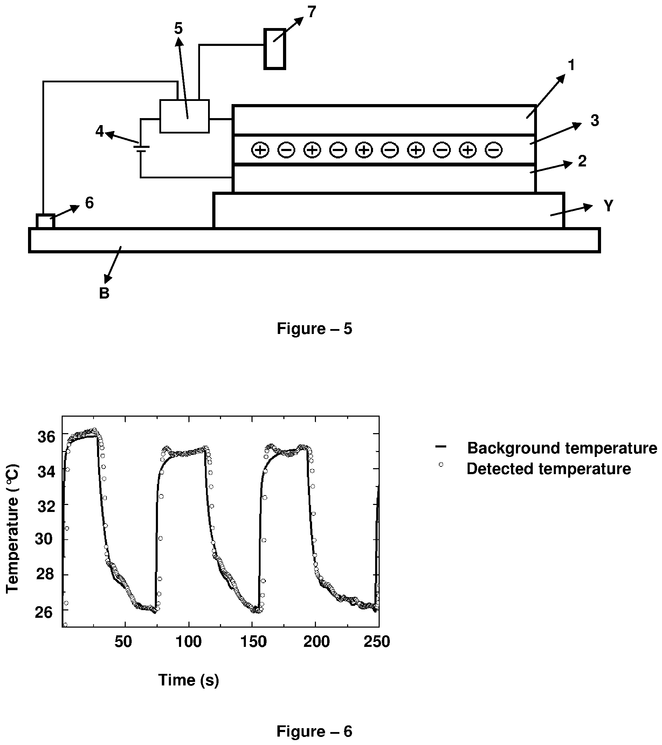

In another preferred embodiment of the invention as shown in Figure 5, said system comprises at least one control unit (5) for controlling the electrical voltage applied to the outer layer (1) and the inner layer (2). Emission value of the outer layer (1) is able to be controlled by means of the control unit (5). In this embodiment, said system also comprises at least one temperature sensor (6) which detects the temperature of the medium (background (B)) in which the material whose thermal radiation emitted from a surface (Y) thereof is controlled is present and which transmits the detected temperature value to the control unit (5). In this embodiment, the control unit (5) can change the electrical voltage applied to the outer layer (1) and the inner layer (2) according to the detected temperature of the medium. Thus, it is ensured that said material emits thermal radiation at the same level as the medium where it is present. In other words, with the system developed according to the present invention, thermal camouflage is achieved. In another preferred embodiment, said system comprises at least one radiation sensor (7) which measures the amount of the thermal radiation emitted from the outer layer (1) and which transmits the measured value to the control unit (5). The control unit (5) controls the electrical voltage applied to the outer layer (1) and the inner layer (2) according to the value measured in the radiation sensor (7). Thus, the amount of the thermal radiation emitted from the outer layer (1) is controlled precisely and a better thermal camouflage is achieved. In an exemplary embodiment, the system developed according to the present invention is placed on a surface (Y) with a temperature of 40°C. In this embodiment, the background (B) temperature is measured by means of said temperature sensor (6). Here, the amount of radiation emitted from the outer layer (1) is also controlled by means of said radiation sensor (7). The amount of the radiation emitted by the background (B) is determined based on the measured background (B) temperature, and the emission value of the outer layer (1) is controlled by changing the electrical voltage applied to the outer layer (1) and the inner layer (2) by the power supply (4). In this manner, it is ensured that the amount of the radiation emitted by the background (B) is equal to the amount of the radiation emitted from the outer layer (1). In said exemplary embodiment, Figure 6 shows the time-dependent change in the surface (Y) temperature detected by a thermal camera versus the change in background (B) temperature. According to the graph, the amount of radiation emitted by the background (B) is equal to the amount of radiation emitted from the outer layer (1) in less than 5 seconds.

In another preferred embodiment of the invention, the system developed according to the present invention comprises a large number of cells whose emission is controlled individually. In this embodiment, each cell comprises a pair of at least one outer layer (1) and one inner layer (2) wherein the electrical voltage applied on them is controlled individually. In an exemplary embodiment, the outer layer (1) and the inner layer (3) comprised by each cell can be independent from each other, or the adjacent cells can share the same outer layer (1) or the same inner layer (2). For example, by virtue of the fact that at least two outer layers (1) are in the form of a horizontal strip and at least two inner layers (2) are in the form of a vertical strip, emission of the cells obtained (at least 4 cells) is able to be controlled individually.

When the system developed according to the present invention is placed on a surface (Y) which has a higher temperature than the background (B), the emission value of the outer layer (1) is controlled (decreased) by means of the electrical voltage applied to the outer layer (1) and the inner value (2) so as to make equal the amount of radiation emitted from the background (B) and from the outer layer (1). When the system is placed on a surface (Y) which has a lower temperature than the background (B), radiation reflection amount of the outer layer (1) is able to be controlled (increased) by means of the electrical voltage applied to the outer layer (1) and the inner value (2) by the power supply (4). Thus, the radiation emitted to the environment due to the temperature of the background (B) is reflected much more by the outer layer (1) so that the amount of radiation emitted from the background (B) and from the outer layer (1) is made equal. In other words, thanks to the system developed according to the present invention, it can be ensured that a hot surface (Y) is perceived as cold and a cold surface (Y) is perceived as hot.

In the system developed according to the present invention, by applying electrical voltage to the outer layer (1) and the inner layer (2), anions and/or cations in the electrolyte located in the intermediate layer (3) are passed to the outer layer (1). Thus, the emission value of the outer layer (1) can be changed and the thermal radiation emitted from the outer layer (1) to the outside can be controlled.

## Claims

1. A system for controlling thermal radiation emitted from a surface (Y) of a material, **characterized by** comprising:
- at least one outer layer (1) which comprises 20-500 graphene layers;
- at least one inner layer (2) which is situated below the outer layer (1);
- at least one intermediate layer (3) which is provided between the outer layer (1) and the inner layer (2) and comprising electrolyte, whereby the inner layer (2) has a structure which does not interact with the anions and/or cations in the electrolyte of the intermediate layer (3);
- at least one power supply (4) which applies electrical voltage to the outer layer (1) and the inner layer (2) so as to allow anions and/or cations in the electrolyte located in the intermediate layer (3) to pass to the outer layer (1);
- at least one control unit (5) for controlling the electrical voltage applied to the outer layer (1) and the inner layer (2).

2. A system according to Claim 1, **characterized in that** the graphene layer has a thickness of 1-150 nm.

3. A system according to Claim 1, **characterized in that** the inner layer (2) comprises a heat-resistant substrate, and a conductive layer which is provided on the substrate and has an inert structure which does not interact with the ionic structures.

4. A system according to Claim 3, **characterized in that** said the heat-resistant substrate is a nylon layer with a thickness of 25 µm.

5. A system according to Claim 3, **characterized in that** said conductive layer is a gold layer with a thickness of 100 nm.

6. A system according to Claim 1, **characterized in that** said intermediate layer (3) comprises a porous polymer film, and an electrolyte that is present in said polymer film.

7. A system according to Claim 1, **characterized by** comprising at least one temperature sensor (6) which detects the temperature of the medium in which the material is present and which transmits the detected temperature value to the control unit (5).

8. A system according to Claim 1 or Claim 7, **characterized by** comprising at least one radiation sensor (7) which measures the amount of the thermal radiation emitted from the outer layer (1) and which transmits the measured value to the control unit (5).

9. A system according to Claim 1, **characterized by** comprising a large number of cells whose emission is controlled individually.

10. A system according to Claim 1, **characterized by** comprising at least one electrode layer (9) which is situated on the outer layer (1) and which allows the current received from the power supply (4) to pass uniformly over the outer layer (1).

11. A system according to Claim 10, **characterized in that** the electrode layer (9) is in the form of a mesh.

12. A system according to Claim 1, **characterized by** comprising at least one insulation layer (8) which is situated on the outer layer (1) and which prevents the outer layer (1) from being damaged by the environmental factors.

13. A system according to Claim 12, **characterized in that** the insulation layer (8) has preferably an infrared-permeable structure.

## Patentansprüche

1. System zur Steuerung von Wärmestrahlung, die von einer Oberfläche (Y) eines Materials emittiert wird, **dadurch gekennzeichnet, dass** das System Folgendes umfasst:
mindestens eine äußere Schicht (1), die 20-500 Graphenschichten umfasst;
mindestens eine innere Schicht (2), die sich unter der äußeren Schicht (1) befindet;
mindestens eine Zwischenschicht (3), die zwischen der äußeren Schicht (1) und der inneren Schicht (2) angeordnet ist und Elektrolyt umfasst, wobei die innere Schicht (2) eine Struktur aufweist, die mit den Anionen und/oder Kationen im Elektrolyten der Zwischenschicht (3) nicht wechselwirkt;
mindestens eine Spannungsversorgung (4), die an die äußere Schicht (1) und die innere Schicht (2) elektrische Spannung anlegt, um den Anionen und/oder Kationen im Elektrolyten, der sich in der Zwischenschicht (3) befindet, zu ermöglichen, zur äußeren Schicht (1) zu fließen;
mindestens eine Steuereinheit (5), um die elektrische Spannung, die an die äußere Schicht (1) und die innere Schicht (2) angelegt wird, zu steuern.

2. System nach Anspruch 1, **dadurch gekennzeichnet, dass** die Graphenschicht eine Dicke von 1-150 nm hat.

3. System nach Anspruch 1, **dadurch gekennzeichnet, dass** die innere Schicht (2) ein wärmebeständiges Substrat und eine leitfähige Schicht umfasst, die auf dem Substrat angeordnet ist und eine inerte Struktur aufweist, die nicht mit der Ionenstruktur wechselwirkt.

4. System nach Anspruch 3, **dadurch gekennzeichnet, dass** das wärmebeständige Substrat eine Nylonschicht mit einer Dicke von 25 µm ist.

5. System nach Anspruch 3, **dadurch gekennzeichnet, dass** die leitfähige Schicht eine Goldschicht mit einer Dicke von 100 nm ist.

6. System nach Anspruch 1, **dadurch gekennzeichnet, dass** die Zwischenschicht (3) einen porösen Polymerfilm und einen Elektrolyten umfasst, der in dem Polymerfilm vorhanden ist.

7. System nach Anspruch 1, **dadurch gekennzeichnet, dass** das System mindestens einen Temperatursensor (6) umfasst, der die Temperatur des Mediums, in dem das Material vorhanden ist, detektiert und den detektierten Temperaturwert zur Steuereinheit (5) überträgt.

8. System nach Anspruch 1 oder 7, **dadurch gekennzeichnet, dass** das System mindestens einen Strahlungssensor (7) umfasst, der die Menge der Wärmestrahlung, die von der äußeren Schicht (1) emittiert wird, misst und den gemessenen Wert zur Steuereinheit (5) überträgt.

9. System nach Anspruch 1, **dadurch gekennzeichnet, dass** das System eine große Anzahl von Zellen hat, deren Emission individuell gesteuert wird.

10. System nach Anspruch 1, **dadurch gekennzeichnet, dass** das System mindestens eine Elektrodenschicht (9) umfasst, die sich an der äußeren Schicht (1) befindet und die es ermöglicht, dass der von der Spannungsversorgung (4) erhaltene Strom gleichmäßig über die äußere Schicht (1) fließt.

11. System nach Anspruch 10, **dadurch gekennzeichnet, dass** die Elektrodenschicht (9) in Form eines Netzes vorliegt.

12. System nach Anspruch 1, **dadurch gekennzeichnet, dass** das System mindestens eine Isolationsschicht (8) umfasst, die sich an der äußeren Schicht (1) befindet und die verhindert, dass die äußere Schicht (1) durch Umweltfaktoren beschädigt wird.

13. System nach Anspruch 12, **dadurch gekennzeichnet, dass** die Isolationsschicht (8) vorzugsweise eine infrarotdurchlässige Struktur aufweist.

## Revendications

1. Système de commande de rayonnement thermique émis depuis une surface (Y) d'un matériau, **caractérisé en ce qu'**il comprend :
- au moins une couche externe (1) qui comprend 20-500 couches de graphène ;
- au moins une couche interne (2) qui est située sous la couche externe (1) ;
- au moins une couche intermédiaire (3) qui est prévue entre la couche externe (1) et la couche interne (2) et comprenant un électrolyte, de telle sorte que la couche interne (2) présente une structure qui n'interagit pas avec les anions et/ou cations dans l'électrolyte de la couche intermédiaire (3) ;
- au moins une alimentation électrique (4) qui applique une tension électrique à la couche externe (1) et la couche interne (2) afin de permettre à des anions et/ou cations dans l'électrolyte situé dans la couche intermédiaire (3) de passer à la couche externe (1) ;
- au moins une unité de commande (5) pour commander la tension électrique appliquée à la couche externe (1) et la couche interne (2).

2. Système selon la revendication 1, **caractérisé en ce que** la couche de graphène présente une épaisseur de 1-150 nm.

3. Système selon la revendication 1, **caractérisé en ce que** la couche interne (2) comprend un substrat thermorésistant, et une couche conductrice qui est prévue sur le substrat et présente une structure inerte qui n'interagit pas avec les structures ioniques.

4. Système selon la revendication 3, **caractérisé en ce que** ledit substrat thermorésistant est une couche de nylon d'une épaisseur de 25 µm.

5. Système selon la revendication 3, **caractérisé en ce que** ladite couche conductrice est une couche d'or d'une épaisseur de 100 nm.

6. Système selon la revendication 1, **caractérisé en ce que** ladite couche intermédiaire (3) comprend un film polymère poreux, et un électrolyte qui est présent dans ledit film polymère.

7. Système selon la revendication 1, **caractérisé en ce qu'**il comprend au moins un capteur de température (6) qui détecte la température du milieu dans lequel le matériau est présent et qui transmet la valeur de température détectée à l'unité de commande (5).

8. Système selon la revendication 1 ou la revendication 7, **caractérisé en ce qu'**il comprend au moins un capteur de rayonnement (7) qui mesure la quantité du rayonnement thermique émis depuis la couche externe (1) et qui transmet la valeur mesurée à l'unité de commande (5).

9. Système selon la revendication 1, **caractérisé en ce qu'**il comprend un grand nombre de cellules dont l'émission est commandée individuellement.

10. Système selon la revendication 1, **caractérisé en ce qu'**il comprend au moins une couche d'électrode (9) qui est située sur la couche externe (1) et qui permet au courant reçu depuis l'alimentation électrique (4) de passer uniformément au-dessus de la couche externe (1).

11. Système selon la revendication 10, **caractérisé en ce que** la couche d'électrode (9) est sous la forme d'un treillis.

12. Système selon la revendication 1, **caractérisé en ce qu'**il comprend au moins une couche isolante (8) qui est située sur la couche externe (1) et qui empêche la couche externe (1) d'être détériorée par les facteurs environnementaux.

13. Système selon la revendication 12, **caractérisé en ce que** la couche isolante (8) présente de préférence une structure perméable aux infrarouges.
